# EUROPEAN PATENT SPECIFICATION

(11) **EP 1 060 332 B1**
(45) Date of publication and mention of the grant of the patent: **12.11.2003**
(21) Application number: 98908323.3
(22) Date of filing: 04.03.1998
(51) Int. Cl.: F02M 21/02

(54) **FUEL INJECTION DRIVE FOR AN INTERNAL COMBUSTION ENGINE**
BRENNSTOFFEINSPRITZTREIBER FÜR EINE BRENNKRAFTMASCHINE
COMMANDE D'INJECTION DE CARBURANT POUR MOTEUR A COMBUSTION INTERNE

(43) Date of publication of application: 20.12.2000
(73) Proprietor: Vialle Alternative Fuel Systems B.V., 5626 EA Eindhoven (NL)
(72) Inventor: JAASMA, Servatius, Alfons, Maria, NL-5627 TE Eindhoven (NL)
(74) Representative: van Westenbrugge, Andries
(86) International application number: NL9800123
(87) International publication number: WO99045262

(56) References cited:
- DE-A- 4 344 190
- DE-A- 19 611 381
- DE-A- 19 611 434
- PATENT ABSTRACTS OF JAPAN vol. 98, no. 5, 30 April 1998 & JP 10 018915 A (AISAN IND CO), 20 January 1998

## Description

The present invention relates to a fuel injection device for an internal combustion engine according to the preamble of claim 1.

Such a fuel injection device is generally known in the prior art. For example, an injection system for LPG is marketed by applicant under the name of LPI. The LPG in this case is in a liquid state during the injection and is not converted to vapour form until it is in the intake duct. Such a system has many advantages, such as negligible loss of power compared with petrol as the fuel, accurate metering possibilities and simple connection to electronics of electrically controlled petrol injection systems.

In order to ensure that LPG used remains in the liquid state, a pump for increasing the pressure is used. Numerous measures are also taken to prevent heat transfer as much as possible from parts of the internal combustion engine to the supply discharge pipes or injectors. The result of this is that LPG can be guaranteed to be present in liquid state in the injectors in all operating circumstances.

It has been found that injectors used can show some (vapour) leakage over the valve system which is neglectable for normal operation. However, it has been shown in liquid condition that after the internal combustion engine has been switched off evaporated fuel goes into the intake manifold and makes starting more difficult. For the first part of the mixture which has been drawn in will contain excess fuel and ignite poorly, which gives rise to a risk of the spark plugs becoming fouled. This problem is particularly prevalent if the starting-up is on petrol. For during the first starting revolutions an excess of a mixture of vaporised LPG and petrol will be present, with the result that the petrol could well become deposited on the electrodes of the spark plugs.

JP-A-10018915 discloses an internal combustion engine comprising a fuel injection system for gaseous fuel having fuel injectors including a metering valve. A single shut-off valve is provided which is actuated by a control system to be permanently opened during operation and closed immediately after shut-off of the engine, to prevent leakage.

US-A-5,159,915 discloses an injector provided with a heating element. This injector is designed exclusively for running on petrol.

It is the object of the present invention to provide a simple way of avoiding as far as possible the effect of leakage form the injectors for injecting liquid gas.

This object is achieved by the characterising features of claim 1.

The present invention incorporates a second valve system that is placed in series with the first one and is operated only after shut down and start up of the engine. Furthermore its orifice is substantially larger than that of the first valve system. In the 'closed' position the second valve system is 'leak tight'. This latter characteristic can be achieved because of the limited number of cycles that the valve will encounter during its lifetime. More suitable sealing materials and mechanisms can be chosen for this second valve system.

Although the invention has been described above with reference to an LPG-driven engine, it should be understood that this principle can be used for any low boiling fuel which is relatively simple to convert from liquid phase to vapour phase of normal ambient temperatures. An example of the above is DME (dimethyl ether).

Through the use of a second downflow shut-off valve in case of evaporating LPG through the metering valve because of the small volume between both valves within a relatively short term the related space is completely filled and no further evaporation takes place.

During or shortly after starting of the engine first of all the shut-off valve is opened and a relatively small quantity of the fuel is released not impairing starting of the related engine.

The shut-off valve can be driven through pressure (vacuum) and can be electrically controlled.

The invention will be explained in greater detail below with reference to an exemplary embodiment illustrated in the drawing, in which:
Fig. 1 shows diagrammatically in side view a part of an internal combustion engine;
Fig. 2 shows the diagram of the various components of the device according to the invention;

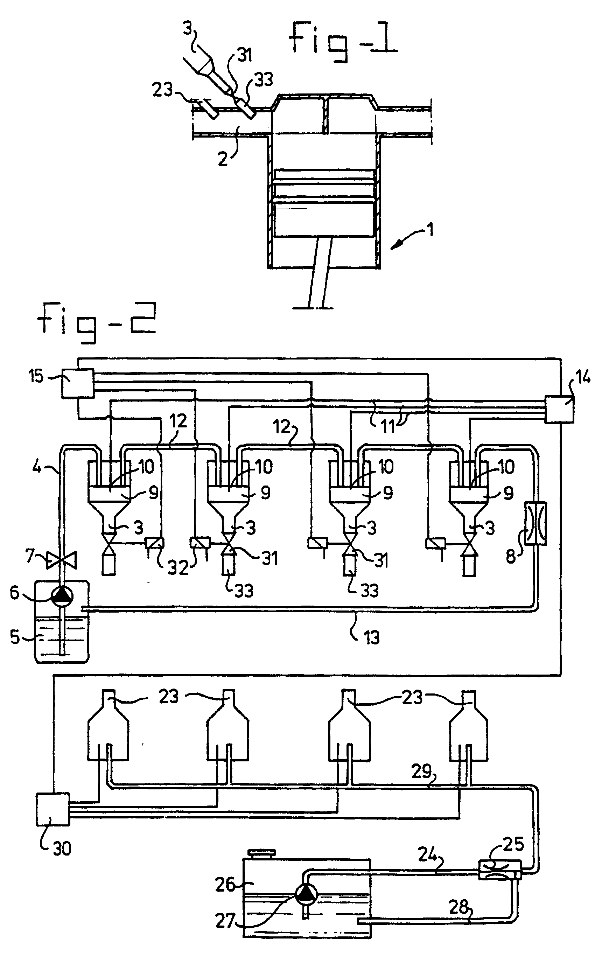

An internal combustion engine is indicated by 1 in Fig. 1. This engine is illustrated only very diagrammatically and, as emerges from Fig. 2, in this case it is an four-cylinder engine. The intake duct is indicated by 2, and an injector 3 and secondary valve system 31 for liquid LPG and an injector 23 for petrol are fitted therein. All this is explained further with reference to Fig. 2.

It can be seen that injector 3 is connected by way of a pipe 4 and a pressure regulator 8 - with the interposition of a valve 7 and a pump 6 - to a tank 5 containing liquid LPG. Injector 3 is provided with a metering valve 9 which is operated by a coil 10, not shown in detail, connected by way of a line 11 to the control mechanism 14.Pipe 12 is connected to pipe 4 and serves to supply the next injector 3 and to discharge excess LPG from the first injector 3 (one furthest left). This injector is designed in the same way, and the last injector 3 (one furthest right) is connected by way of a return pipe 13, in which a pressure regulator 8 is accommodated, to tank 5.

In series with the metering valve system 9,10 shut off valve 31 according to the invention is placed. The discharge 33 of this valve is connected to the intake manifold. Shut off valve 31 is operated, is this example, by means of a schematically shown electromagnet 32.

Apart from this LPG injection system, a conventional petrol injection system can be present.The latter consists of injectors 23 which are fitted on a fuel rail 29 which is connected by way of a pressure regulator 25 to a pump 27 by connecting a supply pipe 24 between them. A return pipe 28 is present and the above are fitted in a tank 26. The system is controlled by means of device 30, which is connected in a manner generally known in the prior art to control mechanism 14.

The device described functions as follows:

During normal running the petrol injection device is not in operation and metering valves 9 supply the engine with fuel whilst valve 31 is permanently opened through operation of coil 32, by means of control mechanism 15. After shut down of the engine the coils 32 are operated.

This will cause the valves 31 to move from the 'open' position to the 'closed' position. Subsequently the fuel injector valve 3 will show a certain leakage, this leaked fuel will be trapped between valve system 3 and valve system 31 and further leaking will be prevented.

When the engine is restarted, the control unit 15 will operated the electro magnets 32 to move the valves 31 from the 'closed' to the 'open' position. This will cause the small volume of fuel accommodated between valves 3 and 31 to be released to the intake manifold. Positioning valves 9 and 31 very close together will result in a very small volume of fuel to be trapped and released. Subsequently the normal cranking procedure will not be affected noticeable.

With the device described above the negative effects of leaking of the injectors is prevented, without it being necessary to use very expensive and complex injectors.

The actuation and operation of shut off valve system 31 can of course be engineered in many ways, such as pneumatically, hydraulically or by any other energy source available at, or near the engine.

These and further variants are obvious to the person skilled in the art after reading this description, and are within the scope of the appended claims.

## Claims

1. Internal combustion engine (1) comprising a fuel injection system for a low boiling fuel, which is relatively simple to convert from liquid phase to vapour phase at normal ambient temperature having at least one electrically controlled fuel injector (3) with a feed and discharge duct in which a first metering valve (9) is provided, wherein downstream in the direction of fuel flow of each of said metering valve (9) a shut-off valve (31) is provided, **characterised in that**, said shut-off valve (31) is actuated by a control system (15) such that during operation of the engine the valve is permanently opened and immediately after shut-off of the engine is closed.

2. Internal combustion engine according to claim 1, wherein said shut-off valve (31) is permanently closed if the engine is in non-operative condition.

3. Internal combustion engine according to one of the proceeding claims, wherein said shut-off valve is electrically operated.

4. Internal combustion engine according to one of the proceeding claims, wherein said shut-off valve is solenoid (32) operated.

5. Internal combustion angle according to one of the proceeding claims wherein in the open condition of both the shut-off valve and the metering valve the flow resistance of the shut-off valve is substantial lower than the flow resistance of the metering valve.

## Patentansprüche

1. Brennkraftmaschine (1) mit einem Brennstoffeinspritzsystem für einen niedrig siedenden Brennstoff, der bei normaler Umgebungstemperatur relativ einfach aus der flüssigen Phase in die Dampfphase umzuwandeln ist, mit wenigstens einem elektrisch gesteuerten Brennstoffinjektor (3) mit einer Zufuhr- und Abgabeleitung, in der ein erstes Dosierventil (9) vorgesehen ist, wobei in Flußrichtung des Brennstoffs stromabwärts jedes Dosierventils (9) ein Sperrventil (31) vorgesehen ist, **dadurch gekennzeichnet, daß** das Sperrventil (31) durch ein Steuersystem (15) so betätigt wird, daß das Ventil während des Betriebs der Brennkraftmaschine permanent geöffnet ist und sofort nach dem Abschalten der Brennkraftmaschine geschlossen wird.

2. Brennkraftmaschine nach Anspruch 1, bei der das Sperrventil (31) permanent geschlossen ist, wenn die Brennkraftmaschine nicht in Betrieb ist.

3. Brennkraftmaschine nach einem der vorstehenden Ansprüche, bei der das Sperrventil elektrisch betätigt ist.

4. Brennkraftmaschine nach einem der vorstehenden Ansprüche, bei der das Sperrventil durch eine Spule (32) betätigt ist.

5. Brennkraftmaschine nach einem der vorstehenden Ansprüche, bei der in dem Zustand, in dem sowohl das Sperrventil als auch das Dosierventil offen ist, der Strömungswiderstand des Sperrventils wesentlich kleiner ist als der des Dosierventils.

## Revendications

1. Moteur (1) à combustion interne comprenant un système d'injection de carburant pour un carburant à point d'ébullition bas, qu'il est relativement simple de faire passer d'une phase liquide à une phase gazeuse à température ambiante normale, ayant au moins un injecteur (3) de carburant commandé électriquement avec un conduit d'alimentation et de vidange dans lequel une première soupape de réglage (9) est disposée, conduit dans lequel une vanne d'arrêt (31) est disposée en aval, selon la direction du flux de carburant, de chacune desdites soupapes de réglage (9), **caractérisé en ce que** ladite vanne d'arrêt (31) est activée par un système de commande (15) tel que durant le fonctionnement du moteur, la vanne est ouverte en permanence et qu'elle est fermée immédiatement après que la coupure du moteur soit achevée.

2. Moteur à combustion interne selon la revendication 1, dans lequel ladite vanne d'arrêt (31) est fermée en permanence si l'engin est en condition de non fonctionnement.

3. Moteur à combustion interne selon l'une des revendications précédentes, dans lequel ladite vanne d'arrêt est actionnée électriquement.

4. Moteur à combustion interne selon l'une des revendications précédentes, dans lequel ladite vanne d'arrêt est actionnée par un solénoïde (32).

5. Moteur à combustion interne selon l'une des revendications précédentes, dans lequel, lorsque les soupapes de fermeture et de réglage sont toutes les deux en condition d'ouverture, la résistance à l'écoulement de la vanne d'arrêt est sensiblement plus faible que la résistance à l'écoulement de la soupape de réglage.
